# EUROPÄISCHE PATENTSCHRIFT

(11) **EP 2 661 148 B1**
(45) Veröffentlichungstag und Bekanntmachung des Hinweises auf die Patenterteilung: **07.01.2015**
(21) Anmeldenummer: 13166238.9
(22) Anmeldetag: 02.05.2013
(51) Int. Cl.: H04W 12/12, H04W 88/08, H04W 84/04, H04M 3/20

(54) **Detektierung eines physikalischen Abgriffs von Datensignalen in einer Basisstation**
Detecting wiretapping within a base station
Détection d'un branchement clandestin dans une station de base

(30) Priorität: 04.05.2012 DE 102012008737
(43) Veröffentlichungstag der Anmeldung: 06.11.2013
(73) Patentinhaber: Deutsche Telekom AG, 53113 Bonn (DE)
(72) Erfinder: Klatt, Axel, 50999 Köln (DE)
(74) Vertreter: Schwöbel, Thilo K.

(56) Entgegenhaltungen:
- DE-A1- 10 342 806
- US-A- 4 658 099
- US-A- 5 142 560
- "picoChip Femtocell Overview", , 1. Juni 2008 (2008-06-01), Seiten 1-30, XP055077891, Gefunden im Internet: URL:http://www.commnexus.org/assets/008/84 52.pdf [gefunden am 2013-09-05]
- "3rd Generation Partnership Project; Technical Specification Group Service and System Aspects; Security of H(e)NB; (Release 8)", 3GPP STANDARD; 3GPP TR 33.820, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V8.3.0, 18. Dezember 2009 (2009-12-18) , Seiten 1-99, XP050401350, [gefunden am 2009-12-18]
- GSMA: "Femtocell Deployment Security Issues White Paper", 3GPP DRAFT; S3-081097 GSMA FCG SECURITY WHITE PAPER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. Sophia; 20080918, 18. September 2008 (2008-09-18), XP050334141, [gefunden am 2008-09-18]

## Beschreibung

### Stand der Technik

Die Erfindung betrifft eine Basisstationsvorrichtung zum Betrieb als Teil eines Zugangsnetzes eines Telekommunikationsnetzes, insbesondere Mobilkommunikationsnetzes, wobei die Basisstationsvorrichtung ein Gehäuse und in dem Gehäuse eine Funkschnittstelleneinheit sowie eine Kernnetzschnittstelleneinheit aufweist und wobei die Basisstationsvorrichtung zwischen der Funkschnittstelleneinheit einerseits und der Kernnetzschnittstelleneinheit andererseits einen Netzwerkleitungsabschnitt aufweist.

Die Erfindung betrifft ferner ein Verfahren zum Betrieb einer Basisstationsvorrichtung als Teil eines Zugangsnetzes eines Telekommunikationsnetzes, insbesondere eines Mobilkommunikationsnetzes, wobei die Basisstationsvorrichtung ein Gehäuse und in dem Gehäuse eine Funkschnittstelleneinheit sowie eine Kernnetzschnittstelleneinheit aufweist. Einen Überblick über im Stand der Technik gegenwärtig realisierte Architekturen von Basisstationen mit einer Funkschnittstelleneinheit und einer Kernnetzschnittstelleneinheit sowie deren Eigenschaften liefert eine Präsentation des Unternehmens picoChip ("picoChip Femtocell Overview". 1. Juni 2008, s. 1-30, URL: http: //www.commnexus.org/assets/008/8452.pdf [gefunden am 2013-09-05]). Es sind im Stand der Technik vielfältige Verfahren bekannt, um die Sicherheit von Nutzerdaten in zellularen Mobilfunknetzen zu gewährleisten. Beispielsweise sehen die verschiedenen Mobilfunkstandards eine Reihe von Funktionalitäten zur Verschlüsselung und zur Integritätssicherstellung sowohl von Nutzerdaten als auch von Signalisierungsdaten vor.

US 5 142 560 A offenbart eine Vorrichtung und Methode zum Detektieren von unerlaubt zugeschalteten Telefonschleifen und/oder Abhörvorrichtungen. DE 103 42 806 A1 offenbart ein Verfahren und eine Kommunikationsanordnung zur Detektion zumindest einer weiteren mit zumindest einer Teilnehmeranschlussleitung verbindbaren Kommunikationseinrichtung. US 4658 099 A offenbart eine Vorrichtung und Methode zum Detektieren, ob eine unautorisierte Überwachungsvorrichtung in eine Kommunikationsverbindung zwischen einer Endnutzervorrichtung und einer zentralen Schaltstation installiert worden ist.

In aktuellen Mobilfunksystemen wie UMTS (Universal Mobile Telecommunications System) und LTE (Long Term Evolution) gibt es eine Reihe von verschiedenen Verschlüsselungsansätzen, welche heute typischerweise in allen Mobilfunknetzen eingesetzt werden. Hierzu gehören unter anderem die gegenseitige Authentifizierung des Terminals, d. h. des Telekommunikationsendgerätes, gegen das Mobilfunknetz sowie des Mobilfunknetzes gegenüber dem Telekommunikationsendgerät. Diese Verfahren werden auch mit dem Schlagwort Authentication, d. h. Authentifizierung, bezeichnet. Weiterhin ist es im Stand der Technik bekannt, eine Verschlüsselung der Funkdatenübertragung zwischen dem Telekommunikationsendgerät (nachfolgend auch als Terminal bezeichnet) und der Funknetzwerk-Steuereinrichtung RNC (Radio Network Controller) für den Fall eines UMTS-Netzwerkes bzw. zwischen dem Telekommunikationsendgerät und der LTE-Basisstation (eNodeB) vorzusehen. Diese Verschlüsselung der Funkdatenübertragung wird auch mit dem Schlagwort Verschlüsselung bzw. englisch Ciphering bezeichnet. Ferner ist es gemäß dem Stand der Technik bekannt, eine Integritätssicherstellung der Funkdatenübertragung zwischen dem Telekommunikationsendgerät und der Funknetzwerk-Steuereinrichtung (RNC) bzw. zwischen dem Telekommunikationsendgerät und der LTE-Basisstation (eNB) zu realisieren. Dies wird auch mit dem Schlagwort des Integritätsschutzes, englisch Integrity Protection, bezeichnet.

In klassischen Mobilfunksystemen wie dem GSM-System (Global System for Mobile Telecommunications) und UMTS terminiert die Funksicherung (d. h. die Verschlüsselung bzw. die Integritätssicherstellung) typischerweise in solchen Netzwerkelementen, welche an einem für Dritte nicht zugänglichen Ort aufgestellt sind, nämlich insbesondere dem Basisstationssystem (BSS, Base Station Subsystem) bzw. der Funknetzwerk-Steuereinrichtung (RNC). Diese Terminierung der Sicherung an Orten, die für Dritte nicht zugänglich sind, ist gemäß dem LTE-Standard nicht der Fall, weil dort die Funksicherung (d. h. die Realisierung einer Verschlüsselung und einer Integritätssicherstellung) in der LTE-Basisstation, d. h. im eNodeB, endet, welche sich nicht zwingend an einem für Dritte unzugänglichen Ort befinden muss.

Aufgrund eines Trends, Mobilfunknetzwerkelemente immer kleiner werden zu lassen, insbesondere mittels sogenannter Femtozellen bzw. Pikozellen, liegt eine Tendenz vor, Netzwerkelemente bei Endkunden zu installieren. Hierdurch ist nicht gewährleistet, dass Dritte keinen physikalischen Zugang zu solchen Netzwerkelementen haben, so dass das Risiko von Angriffen auf die Datenübertragung erhöht ist.

### Offenbarung der Erfindung

Der Erfindung liegt die Aufgabe zugrunde, eine Basisstationsvorrichtung zum Betrieb als Teil eines Zugangsnetzes eines Telekommunikationsnetzes, insbesondere eines Mobilkommunikationsnetzes, sowie ein Verfahren zum Betrieb einer Basisstationsvorrichtung bereitzustellen, welche die Nachteile des Standes der Technik nicht aufweisen und insbesondere eine Erhöhung der Sicherheit der Datenkommunikation zwischen einem mit der Basisstationsvorrichtung über eine Funkverbindung verbundenen Telekommunikationsendgerät, insbesondere ein mobiles Telekommunikationsendgerät, einerseits und einem Kernnetz des Telekommunikationsnetzes andererseits zu realisieren.

Diese Aufgabe wird erfindungsgemäß gelöst durch eine Basisstationsvorrichtung zum Betrieb als Teil eines Zugangsnetzes eines Telekommunikationsnetzes, insbesondere eines Mobilkommunikationsnetzes, wobei die Basisstationsvorrichtung ein Gehäuse und in dem Gehäuse eine Funkschnittstelleneinheit sowie eine Kernnetzschnittstelleneinheit aufweist, wobei die Basisstationsvorrichtung zwischen der Funkschnittstelleneinheit einerseits und der Kernnetzschnittstelleneinheit andererseits ein Netzwerkleitungsabschnitt aufweist, wobei die Funkschnittstelleneinheit durch einen ersten integrierten Schaltkreis und die Kernnetzschnittstelleneinheit durch einen zweiten integrierten Schaltkreis realisiert werden, wobei der erste integrierte Schaltkreis von dem zweiten integrierten Schaltkreis verschieden ist, wobei die Basisstationsvorrichtung eine Messvorrichtung aufweist, wobei die Messvorrichtung derart mit dem Netzwerkleitungsabschnitt wirkverbunden ist, dass durch die Messvorrichtung eine Erfassung wenigstens eines Leitungsparameters des Netzwerkleitungsabschnitts erfolgt, wobei der Leitungsparameter ein Leitungsparameter ist aus der Gruppe von Leitungsparametern umfassend:
-- die Eingangsimpedanz des Netzwerkleitungsabschnitts,
-- den Isolationswert des Netzwerkleitungsabschnitts,
-- die Kapazität des Netzwerkleitungsabschnitts und
-- die Induktivität des Netzwerkleitungsabschnitts,
wobei die Basisstationsvorrichtung derart konfiguriert ist, dass im Fall einer Detektion durch die Messvorrichtung eine Änderung des wenigstens einen Leitungsparameters oberhalb eines vorgegebenen Schwellenwerts ein Indikatorsignal generiert und das Indikatorsignal an die Funkschnittstelleneinheit und/oder die Kernnetzschnittstelleneinheit übermittelt wird, wobei die Änderung des wenigstens einen Leitungsparameters oberhalb des vorgegebenen Schwellenwerts als ein Angriff auf den Netzwerkleitungsabschnitt gedeutet wird, wobei der Angriff durch einen elektrischen und/oder kapazitiven und/oder induktiven Abgriff am Netzwerkleitungsabschnitt realisiert wird, dadurch gekennzeichnet, dass der Netzwerkleitungsabschnitt zwischen dem ersten Schaltkreis und dem zweiten Schaltkreis dazu ausgebildet ist, eine Datenkommunikation zu ermöglichen.

Es ist hierdurch gemäß der vorliegenden Erfindung in vorteilhafter Weise möglich, dass die Sicherheit beim Betrieb einer Basisstationsvorrichtung auch für den Fall verbessert wird, dass vollwertige Mobilfunkzugangssysteme - bestehend aus einer UMTS-Basisstation (NodeB) und einer Funknetzwerk-Steuereinrichtung (RNC) bzw. bestehend aus einer LTE-Basisstation - etwa in Form von Femtozellen bzw. in Form von Pikozellen bei Endkunden des Mobilfunknetzbetreibers installiert werden. Solche Produkte werden typischerweise aufgrund insbesondere des Kostendrucks oftmals, insbesondere bezüglich Schutzmechanismen wie Gehäuse und dergleichen, als Endkunden-Produkte (Consumer Produkte) ausgeführt und nicht als professionelle Produkte im Sinne von professionellen Netzwerkelementen, wie dies bisher bei Mobilfunksystemkomponenten üblich war. Hierdurch ergeben sich bei solchen Systemen völlig neue Angriffsszenarien der Übertragungsstrecke zwischen dem Telekommunikationsendgerät einerseits und dem Kernnetz des Telekommunikationsnetzes, insbesondere des Mobilkommunikationsnetzes, andererseits. Da solche im Bereich von Endkunden aufgestellten Basisstationsvorrichtungen in einer der Kontrolle des Mobilfunkbetreibers entzogenen Umgebung aufgestellt sind, können Angreifer zumindest potenziell sehr einfach physikalischen Zugriff auf solche Basisstationsvorrichtungen erlangen. Ferner werden für solche Basisstationsvorrichtungen häufig Gehäuse in Form von Plastikgehäusen genutzt, welche leicht zu öffnen und damit schwer abzusichern sind.

Im Folgenden wird die Erfindung am Beispiel einer Basisstationsvorrichtung, insbesondere für Femtozellen bzw. Pikozellen für UMTS-Netze bzw. LTE-Netze, dargestellt, wobei die erfindungsgemäße Basisstationsvorrichtung und das erfindungsgemäße Verfahren nicht auf solche Mobilfunknetze beschränkt ist, sondern beispielsweise auch in WLAN-Netzen bzw. in Teilen eines Mobilfunknetzes, welche auf dem WLAN-Standard beruhen, oder auch für andere Funktechnologien zum Einsatz kommen.

Gemäß der vorliegenden Erfindung wird bei einer Basisstationsvorrichtung ein Netzwerkleitungsabschnitt überwacht, der zwischen einer Funkschnittstelleneinheit und einer Kernnetzschnittstelleneinheit vorhanden ist. Ein solcher Netzwerkleitungsabschnitt ist typischerweise bei Basisstationsvorrichtungen in Form von Femtozellen oder in Form von Pikozellen deshalb vorhanden, weil die Funkschnittstelleneinheit einerseits und die Kernnetzschnittstelleneinheit andererseits typischerweise auf verschiedenen integrierten Schaltkreisen (Integrated Circuits) innerhalb der Basisstationsvorrichtung realisiert sind, wobei auf dem Netzwerkleitungsabschnitt zwischen den beiden integrierten Schaltungen bzw. zwischen der Funkschnittstelleneinheit einerseits und der Kernnetzschnittstelleneinheit andererseits eine Datenkommunikation - insbesondere eine auf dem Internet-Protokoll beruhende Datenkommunikation - im Klartext abläuft und somit mit verhältnismäßig geringem Aufwand an Hardware-Werkzeugen bzw. Software-Werkzeugen abgehört werden kann.

Gemäß der vorliegenden Erfindung ist es vorgesehen, dass wenigstens ein Leitungsparameter des Netzwerkleitungsabschnitts beim Betrieb der Basisstationsvorrichtung überwacht wird und bei einer Veränderung der physikalischen Eigenschaften, d. h. bei einer ausreichend großen Veränderung des wenigstens einen Leitungsparameters des Netzwerkleitungsabschnitts, diese Veränderung erkannt wird und eine entsprechende Aktion ausgelöst wird. Hierbei werden erfindungsgemäß insbesondere die Leitungsparameter Eingangsimpedanz und/oder Isolationswert und/oder Kapazität und/oder Induktivität des Netzwerkleitungsabschnitts überwacht.

Im Fall eines Angriffs auf den Netzwerkleitungsabschnitt mit dem Ziel, ein Signal auf dem Netzwerkleitungsabschnitt beispielsweise abzuhören oder auch ein Signal auf dem Netzwerkleitungsabschnitt zu manipulieren, ist es notwendig, einen Abgriff am Netzwerkleitungsabschnitt zu realisieren, entweder über einen physikalischen elektrischen Abgriff (d. h. ein elektrisches Verbinden der Abgriff-Leitung mit den Datenleitungen des Netzwerkleitungsabschnitts) oder aber einen kapazitiven Abgriff (d. h. ein kapazitives Verbinden der Abgriff-Leitung mit den Datenleitungen des Netzwerkleitungsabschnitts) bzw. auch einen induktiven Abgriff (d. h. ein induktives Verbinden der Abgriff-Leitung mit den Datenleitungen des Netzwerkleitungsabschnitts) zu realisieren. Jeder solche Abgriff verändert jedoch die physikalischen Eigenschaften der Datenleitung des Netzwerkleitungsabschnitts, d. h. verändert einen Leitungsparameter des Netzwerkleitungsabschnitts in Form entweder der Eingangsimpedanz bzw. des Isolationswerts (auch als Ableitungsimpedanz bezeichnet), der Kapazität bzw. der Induktivität des Netzwerkleitungsabschnitts bzw. einer Mehrzahl dieser Leitungsparameter. Im normalen Betriebsfall des Netzwerkleitungsabschnittes sind diese Leitungsparameter, d. h. die physikalischen Eigenschaften der Datenleitungen des Netzwerkleitungsabschnitts stabil bzw. in gewissen Toleranzgrenzen im Wesentlichen stabil, so dass eine Überwachung dieser Leitungsparameter auf plötzliche Änderungen hin von einem oder mehreren der Leitungsparameter erfindungsgemäß dazu dient, einen Angriff auf den Netzwerkleitungsabschnitt, d. h. einen Abgriff der Datenleitung des Netzwerkleitungsabschnitts, zu detektieren. Dies geschieht erfindungsgemäß mittels einer Messvorrichtung, die in der Basisstationsvorrichtung vorhanden ist.

Beispielsweise kann es sich bei der Messvorrichtung um einen Schwingkreis mit einer Auswertung der Schwingfrequenz des Schwingkreises handeln, so dass eine Veränderung eines oder mehrerer der Leistungsparameter des Netzwerkleitungsabschnittes zu einer veränderten Resonanzfrequenz des Schwingkreises führt und damit eine Veränderung eines oder mehrerer solcher Leistungsparameter detektierbar ist. Erfindungsgemäß können sämtliche Technologien zur Auswertung von kapazitiven, induktiven oder Impedanz-Änderungen zur Realisierung der Messvorrichtung herangezogen werden.

Bei der vorliegenden Erfindung ist es besonders bevorzugt, dass die Messvorrichtung Teil der Funkschnittstelleneinheit ist bzw. dass die Messvorrichtung Teil der Kernnetzschnittstelleneinheit ist.

Hierdurch ist es erfindungsgemäß besonders vorteilhaft möglich, dass auch die Messvorrichtung geschützt vorgesehen sein kann, nämlich als Teil der Funkschnittstelleneinheit oder der Kernnetzschnittstelleneinheit. Alternativ dazu kann es erfindungsgemäß jedoch auch möglich sein, dass die Messvorrichtung als separate Einheit, d. h. unabhängig von der Funkschnittstelleneinheit bzw. der Kernnetzschnittstelleneinheit Teil der Basisstationsvorrichtung ist. Erfindungsgemäß ist es ferner auch möglich, dass sowohl eine Messvorrichtung Teil der Funkschnittstelleneinheit ist und eine weitere Messvorrichtung Teil der Kernnetzschnittstelleneinheit bzw. umgekehrt, so dass eine Überwachung des Leitungsparameters des Netzwerkleitungsabschnitts sowohl durch einen Teil der Funkschnittstelleneinheit als auch durch einen Teil der Kernnetzschnittstelleneinheit erfolgt und damit die Überwachung und der Schutz vor einem Angriff des Netzwerkleitungsabschnitts verbessert wird.

Erfindungsgemäß ist es besonders bevorzugt, dass die Basisstationsvorrichtung derart konfiguriert ist, dass im Fall einer Detektion durch die Messvorrichtung einer Änderung des wenigstens einen Leitungsparameters oberhalb eines vorgegebenen Schwellenwerts ein Indikatorsignal generiert und das Indikatorsignal an die Funkschnittstelleneinheit und/oder die Kernnetzschnittstelleneinheit übermittelt wird.

Hierdurch kann in einfacher Weise der Fall eines Angriffs auf den Netzwerkleitungsabschnitt erkannt und entsprechende Maßnahmen eingeleitet werden. Die Detektion durch die Messvorrichtung einer Änderung des wenigstens einen Leitungsparameters, die größer ist als ein vorgegebener Schwellenwert, kann erfindungsgemäß beispielsweise dadurch erfolgen, dass durch den Schwellenwert eine Änderung betragsmäßig vorgegeben wird und sämtliche Änderungen von Leitungsparametern, die betragsmäßig oberhalb des vorgegebenen Schwellenwertes erkannt werden, zu der Generierung des Indikatorsignals führen. Ferner kann es erfindungsgemäß auch vorgesehen sein, dass der Schwellenwert als relative Änderung in einem vorgegebenen Zeitintervall angegeben ist, beispielsweise eine relative Änderung von mehr als 10% Abweichung des Leitungsparameters innerhalb von 60 Sekunden oder dergleichen. Somit kann vermieden werden, dass eine relativ langsame Drift der Leitungsparameter zur (ungewollten) Generierung des Indikatorsignals führt. Hierbei können selbstverständlich unterschiedliche vorgegebene Schwellenwerte vorgegeben sein für unterschiedliche Leitungsparameter, d. h. die vorgegebenen Schwellenwerte sind unterschiedlich, ob es sich bei dem Leitungsparameter um die Eingangsimpedanz, um den Isolationswert, um die Kapazität oder um die Induktivität des Netzwerkleitungsabschnitts handelt.

Erfindungsgemäß ist es ferner bevorzugt, dass die Basisstationsvorrichtung derart konfiguriert ist, dass im Fall der Generierung des Indikatorsignals
-- eine optische und/oder akustische Indikation am Gehäuse der Basisstationsvorrichtung erfolgt und/oder
-- eine Alarmierung eines Netzwerkelements des Kernnetzes des Telekommunikationsnetzes erfolgt und/oder
-- eine Alarmierung eines über die Funkschnittstelleneinheit mit der Basisstationsvorrichtung verbundenen Telekommunikationsendgeräts erfolgt und/oder
-- die Funkschnittstelleneinheit zumindest teilweise abgeschaltet wird.

Hierdurch ist es erfindungsgemäß in vorteilhafter Weise möglich, dass eine flexible Reaktion im Fall einer Erkennung eines Angriffs auf die Basisstationsvorrichtung erfolgen kann. Erfindungsgemäß ist es auch bevorzugt, dass in Abhängigkeit der Überschreitung von Änderungen des überwachten Leitungsparameters bezüglich verschiedener vorgegebener Schwellenwerte unterschiedliche Reaktionen erfolgen. Das bedeutet, dass ein Indikatorsignal beispielsweise generiert wird, wenn eine relative Änderung des Leitungsparameters von zum Beispiel mehr als 3% pro 60 Sekunden (Schwellenwert oder erster Schwellenwert) detektiert wird und dies eine optische und/oder akustische Indikation am Gehäuse der Basisstationsvorrichtung zur Folge hat, während eine Veränderung des überwachten Leitungsparameters von beispielsweise mehr als 6% pro 60 Sekunden (weiterer Schwellenwert bzw. zweiter Schwellenwert) ein weiteres Indikatorsignal zur Folge hat, so dass, aufgrund des weiteren Indikatorsignals, nicht nur eine optische und/oder akustische Indikation am Gehäuse der Basisstationsvorrichtung erfolgt, sondern zusätzlich oder alternativ eine Alarmierung eines Netzwerkelements des Kernnetzes bzw. eine Alarmierung eines an die Basisstationsvorrichtung angebundenen Telekommunikationsendgeräts bzw. eine Abschaltung der Funkschnittstelleneinheit erfolgt.

Die vorliegende Erfindung bezieht sich ferner auch auf ein Verfahren zum Betrieb einer Basisstationsvorrichtung als Teil eines Zugangsnetzes eines Telekommunikationsnetzes, insbesondere eines Mobilkommunikationsnetzes, wobei die Basisstationsvorrichtung ein Gehäuse und in dem Gehäuse eine Funkschnittstelleneinheit sowie eine Kernnetzschnittstelleneinheit aufweist, wobei die Basisstationsvorrichtung zwischen der Funkschnittstelleneinheit einerseits und der Kernnetzschnittstelleneinheit andererseits ein Netzwerkleitungsabschnitt aufweist, wobei die Funkschnittstelleneinheit durch einen ersten integrierten Schaltkreis und die Kernnetzschnittstelleneinheit durch einen zweiten integrierten Schaltkreis realisiert werden, wobei der erste integrierte Schaltkreis von dem zweiten integrierten Schaltkreis verschieden ist, wobei das Verfahren folgende Schritte aufweist:
- ein Überwachen wenigstens eines Leitungsparameters des Netzwerkleitungsabschnitts beim Betrieb der Basisstationsvorrichtung, wobei der Leitungsparameter ein Leitungsparameter ist aus der Gruppe von Leitungsparametern umfassend:
   -- die Eingangsimpedanz des Netzwerkleitungsabschnitts,
   -- den Isolationswert des Netzwerkleitungsabschnitts,
   -- die Kapazität des Netzwerkleitungsabschnitts und
   -- die Induktivität des Netzwerkleitungsabschnitts; und
- ein Generieren eines Indikatorsignals, falls eine Änderung des wenigstens einen Leitungsparameters oberhalb eines vorgegebenen Schwellenwerts detektiert wird und
- ein Deuten der Änderung des wenigstens einen Leitungsparameters oberhalb des vorgegebenen Schwellenwerts als einen Angriff auf den Netzwerkleitungsabschnitt, wobei der Angriff durch einen elektrischen und/oder kapazitiven und/oder induktiven Abgriff am Netzwerkleitungsabschnitt realisiert wird; und
- ein Übermitteln des Indikatorsignals an die Funkschnittstelleneinheit und/oder die Kernnetzschnittstelleneinheit;
dadurch gekennzeichnet, dass der Netzwerkleitungsabschnitt zwischen dem ersten Schaltkreis und dem zweiten Schaltkreis eine Datenkommunikation ermöglicht.

Hierdurch ist es erfindungsgemäß in besonders vorteilhafter Weise möglich, den Betrieb einer Basisstationsvorrichtung sicherer zu gestalten und die Datenkommunikation unter Verwendung von insbesondere kleinen Basisstationen in Form von Pikozellen bzw. Femtozellen besser abzusichern.

Erfindungsgemäß ist es - auch beim erfindungsgemäßen Verfahren zum Betrieb der Basisstationsvorrichtung - insbesondere bevorzugt, dass der wenigstens ein Leitungsparameter durch die Funkschnittstelleneinheit erfasst wird bzw. dass der wenigstens eine Leitungsparameter durch die Kernnetzschnittstelleneinheit erfasst wird.

Ferner ist es erfindungsgemäß bevorzugt, dass ein Indikatorsignal generiert wird, falls eine Änderung des wenigstens einen Leitungsparameters oberhalb eines vorgegebenen Schwellenwerts detektiert wird, wobei das Indikatorsignal an die Funkschnittstelleneinheit und/oder die Kernnetzschnittstelleneinheit übermittelt wird.

Weiterhin ist es beim erfindungsgemäßen Verfahren bevorzugt, dass im Fall der Generierung des Indikatorsignals
-- eine optische und/oder akustische Indikation am Gehäuse der Basisstationsvorrichtung erfolgt und/oder
-- eine Alarmierung eines Netzwerkelements des Kernnetzes des Telekommunikationsnetzes erfolgt und/oder
-- eine Alarmierung eines über die Funkschnittstelleneinheit mit der Basisstationsvorrichtung verbundenen Telekommunikationsendgeräts erfolgt und/oder
-- die Funkschnittstelleneinheit zumindest teilweise abgeschaltet wird.

Ferner bezieht sich die vorliegende Erfindung auch auf ein Computerprogramm mit Programm-Code-Mitteln, mit deren Hilfe alle Schritte des erfindungsgemäßen Verfahrens durchführbar sind, wenn das Computerprogramm auf einer programmierbaren Einrichtung ausgeführt wird.

Weiterhin ist Gegenstand der vorliegenden Erfindung ein Computerprogrammprodukt mit einem computerlesbaren Medium und einen auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt schematisch eine Darstellung einer Basisstationsvorrichtung gemäß der vorliegenden Erfindung.
- **Figur 2**: zeigt schematisch ein Ersatzschaltbild eines Netzwerkleitungsabschnitts.
- **Figur 3 bis 6**: zeigen schematisch verschiedene Angriffsszenarien.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

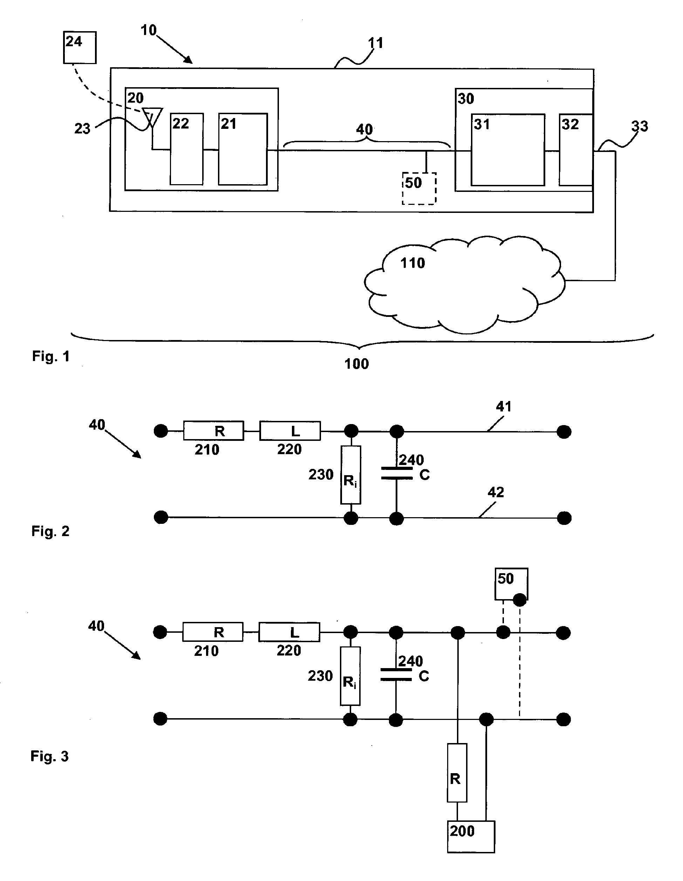

In **Figur 1** ist eine beispielhafte Darstellung einer Basisstationsvorrichtung gemäß der vorliegenden Erfindung dargestellt. Die Basisstationsvorrichtung 10 weist ein Gehäuse 11 auf. Ferner weist die Basisstationsvorrichtung 10 eine Funkschnittstelleneinheit 20, eine Kernnetzschnittstelleneinheit 30 und einen Netzwerkleitungsabschnitt 40 auf. Der Netzwerkleitungsabschnitt 40 ist zwischen der Funkschnittstelleneinheit 20 und der Kernnetzschnittstelleneinheit 30 vorgesehen und überträgt Signale zwischen diesen beiden Einheiten. Erfindungsgemäß weist die Basisstationsvorrichtung 10 auch eine Messvorrichtung 50 auf, wobei die Messvorrichtung 50 gemäß Varianten der vorliegenden Erfindung entweder in der Funkschnittstelleneinheit 20 oder in der Kernnetzschnittstelleneinheit 30 oder auch eine Messvorrichtung 50 in der Funkschnittstelleneinheit 20 und eine weitere Messvorrichtung (nicht dargestellt) in der Kernnetzschnittstelleneinheit 30 (bzw. umgekehrt) vorgesehen sein kann. Weiterhin kann die Messvorrichtung 50 auch unabhängig von der Funkschnittstelleneinheit 20 bzw. der Kernnetzschnittstelleneinheit 30 realisiert sein (was in Figur 1 mittels einer gestrichelten Linie der Messvorrichtung 50 angedeutet ist). Die Messvorrichtung 50 ist derart mit dem Netzwerkleitungsabschnitt 40 wirkverbunden, dass durch die Messvorrichtung 50 eine Erfassung wenigstens eines Leitungsparameters des Netzwerkleitungsabschnitts 40 erfolgt. Bei dem Leitungsparameter handelt es sich um einen Leitungsparameter aus der Gruppe von Leitungsparametern umfassend die Eingangsimpedanz des Netzwerkleitungsabschnitts 40, den Isolationswert des Netzwerkleitungsabschnitts 40, die Kapazität des Netzwerkleitungsabschnitts 40 und die Induktivität des Netzwerkleitungsabschnitts 40.

Die Funkschnittstelleneinheit 20 weist erfindungsgemäß insbesondere einen Basisbandprozessor 21, ein Funksignal Frontend 22 und eine Antenne 23 auf. Die Kernnetzschnittstelleneinheit 30 weist erfindungsgemäß insbesondere ein DSL-Modem 31 und einen Netzwerkanschluss 32 auf, wobei die Kernnetzschnittstelleneinheit 30 mit einer Netzwerkleitung 33 mit dem Kernnetz 110 eines Telekommunikationsnetzes 100 verbunden ist, wobei die Basisstationsvorrichtung 10 Teil des Zugangsnetzes des Telekommunikationsnetzes 100 ist.

Die Funkschnittstelleneinheit 20 realisiert beispielsweise für den Fall eines UMTS-Mobilfunknetzes die Funktionen einer UMTS-Basisstation (NodeB) und der Funknetzwerk-Steuereinrichtung (RNC). Hierdurch wird die verschlüsselte Verbindung mit einem mit der Basisstationsvorrichtung 10 verbundenen Telekommunikationsendgerät 24 in der Funkschnittstelleneinheit 20 terminiert. Entsprechend weist die Funkschnittstelleneinheit 20 für den Fall eines LTE-Mobilfunknetzes die Funktionalität einer LTE-Basisstation (eNodeB) auf, so dass ebenfalls die verschlüsselte Kommunikation mit dem Telekommunikationsendgerät 24 in der Funkschnittstelleneinheit 20 terminiert wird. Für die Verbindung mit dem Kernnetz 110 des Telekommunikationsnetzes 100 ist typischerweise eine DSL-Verbindung oder eine sonstige breitbandige Verbindung der Basisstationsvorrichtung 10 über die Kernnetzschnittstelleneinheit 30 und die Netzwerkleitung 33 vorgesehen, wobei hierbei insbesondere eine gesicherte Verbindung mittels des IPsec-Protokolls vorgesehen ist. Auch diese IPsec-Verbindung wird in der Kommunikation mit dem Kernnetz 110 in der Kernnetzschnittstelleneinheit 30 terminiert, so dass zwischen der Funkschnittstelleneinheit 20 und der Kernnetzschnittstelleneinheit 30 der Netzwerkleitungsabschnitt 40 typischerweise ungesichert ist und erfindungsgemäß überwacht wird. Erfindungsgemäß wird dadurch sichergestellt, dass durch die Überwachung bei einer Veränderung der physikalischen Eigenschaften des Netzwerkleitungsabschnitts 40 dieses erkannt wird und bei einer Veränderung dieser physikalischen Eigenschaften eine entsprechende Aktion ausgelöst wird.

In **Figur 2** ist schematisch ein Ersatzschaltbild des Netzwerkleitungsabschnitts 40 gemäß der vorliegenden Erfindung dargestellt. Der Netzwerkleitungsabschnitt 40 weist Datenleitungen 41, 42 auf, über welche Signale typischerweise in Form von elektrischen Signalen übertragen werden. Der Netzwerkleitungsabschnitt 40 weist bzw. die Datenleitungen 41, 42 weisen eine Eingangsimpedanz 210, eine Induktivität 220, einen Isolationswert bzw. eine Ableitungsimpedanz 230 und eine Kapazität 240 auf. Bei einem Abgriff der Datenleitungen des Netzwerkleitungsabschnitts 40 ändert sich wenigstens einer dieser Leitungsparameter, weshalb ein solcher Abgriff durch die Messvorrichtung 50 detektierbar ist. Beispielsweise umfasst die Messvorrichtung 50 einen Schwingkreis und eine Möglichkeit zur Auswertung der Schwingfrequenz bzw. der Resonanzfrequenz des Schwingkreises derart, dass bei einer Änderung eines oder mehrerer der Leitungsparameter des Netzwerkleitungsabschnitts 40 die Resonanzfrequenz des Schwingkreises geändert wird. In diesem Fall wird eine optische und/oder akustische Indikation, insbesondere am Gehäuse 11 der Basisstationsvorrichtung 10, realisiert bzw. es wird eine Alarmierung eines Netzwerkelements des Kernnetzes 110 bzw. eine Alarmierung des Telekommunikationsendgeräts 24 oder auch eine Abschaltung der Funkschnittstelleneinheit 20 realisiert.

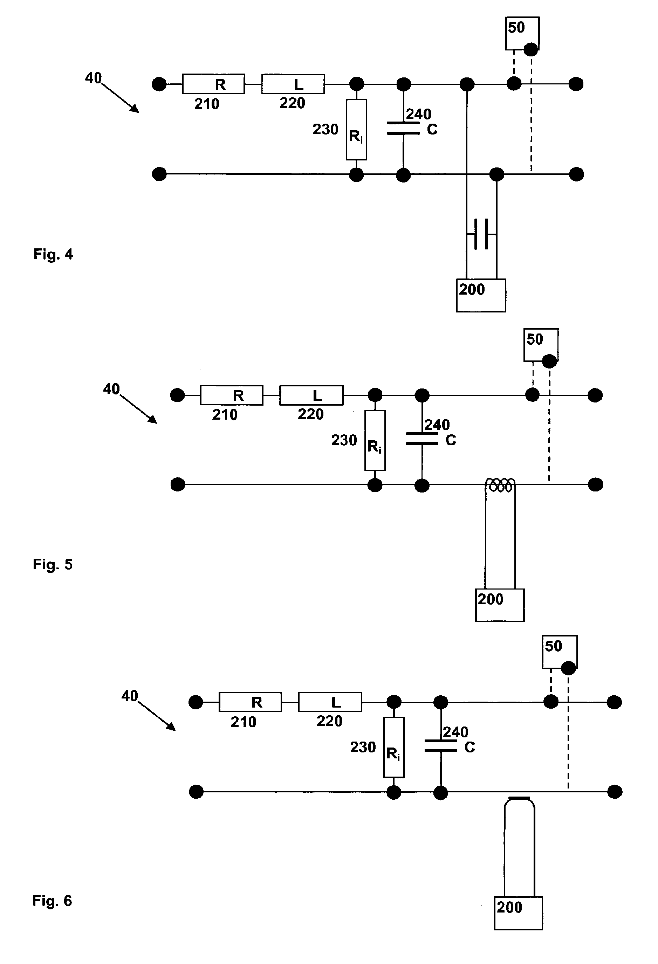

Die **Figuren 3 bis 6** zeigen schematisch verschiedene Angriffsszenarien, wobei die Figur 3 einen elektrischen Abgriff 200 und die Messung der Induktivität der Datenleitungen 41, 42 durch die Messvorrichtung 50 schematisch zeigt, wobei die Figur 4 einen kapazitiven Abgriff 200 und die Messung der Kapazität der Datenleitungen 41, 42 durch die Messvorrichtung 50 schematisch zeigt, wobei die Figur 5 einen induktiven Abgriff 200 und die Messung der Induktivität der Datenleitungen 41, 42 durch die Messvorrichtung 50 schematisch zeigt und wobei die Figur 6 einen weiteren kapazitiven Abgriff 200 und die Messung der Kapazität der Datenleitungen 41, 42 durch die Messvorrichtung 50 schematisch zeigt.

## Patentansprüche

1. Basisstationsvorrichtung (10) zum Betrieb als Teil eines Zugangsnetzes eines Telekommunikationsnetzes (100), insbesondere eines Mobilkommunikationsnetzes, wobei die Basisstationsvorrichtung (10) ein Gehäuse (11) und in dem Gehäuse (11) eine Funkschnittstelleneinheit (20) sowie eine Kernnetzschnittstelleneinheit (30) aufweist, wobei die Basisstationsvorrichtung (10) zwischen der Funkschnittstelleneinheit (20) einerseits und der Kernnetzschnittstelleneinheit (30) andererseits einen Netzwerkleitungsabschnitt (40) aufweist, wobei die Funkschnittstelleneinheit (20) durch einen ersten integrierten Schaltkreis und die Kernnetzschnittstelleneinheit (30) durch einen zweiten integrierten Schaltkreis realisiert werden wobei zwischen dem ersten integrierten Schaltkreis und dem zweiten integrierten Schaltkreis eine Datenkommunikation im Klartext erfolgt, **dadurch gekennzeichnet, daß** die Basisstationsvorrichtung (10) eine Messvorrichtung (50) aufweist, wobei die Messvorrichtung (50) derart mit dem Netzwerkleitungsabschnitt (40) wirkverbunden ist, dass durch die Messvorrichtung (50) eine Erfassung wenigstens eines Leitungsparameters des Netzwerkleitungsabschnitts (40) erfolgt, wobei der Leitungsparameter ein Leitungsparameter ist aus der Gruppe von Leitungsparametern umfassend:
-- die Eingangsimpedanz des Netzwerkleitungsabschnitts (40),
-- den Isolationswert des Netzwerkleitungsabschnitts (40),
-- die Kapazität des Netzwerkleitungsabschnitts (40) und
-- die Induktivität des Netzwerkleitungsabschnitts (40),
wobei die Basisstationsvorrichtung (10) derart konfiguriert ist, dass im Fall einer Detektion durch die Messvorrichtung (50) einer Änderung des wenigstens einen Leitungsparameters oberhalb eines vorgegebenen Schwellenwerts ein Indikatorsignal generiert und das Indikatorsignal an die Funkschnittstelleneinheit (20) und/oder die Kernnetzschnittstelleneinheit (30) übermittelt wird, wobei die Änderung des wenigstens einen Leitungsparameters oberhalb des vorgegebenen Schwellenwerts als ein Angriff auf den Netzwerkleitungsabschnitt (40) gedeutet wird, wobei der Angriff durch einen elektrischen und/oder kapazitiven und/oder induktiven Abgriff am Netzwerkleitungsabschnitt (40) realisiert wird.

2. Basisstationsvorrichtung (10) nach Anspruch 1, **dadurch gekennzeichnet, dass** die Messvorrichtung (50) Teil der Funkschnittstelleneinheit (20) ist

3. Basisstationsvorrichtung (10) nach einem der vorhergehenden Ansprüche, **dadurch gekennzeichnet, dass** die Messvorrichtung (50) Teil der Kernnetzschnittstelleneinheit (30) ist.

4. Basisstationsvorrichtung (10) nach einem der vorhergehenden Ansprüche, **dadurch gekennzeichnet, dass** die Basisstationsvorrichtung (10) derart konfiguriert ist, dass im Fall der Generierung des Indikatorsignals
-- eine optische und/oder akustische Indikation am Gehäuse (11) der Basisstationsvorrichtung (10) erfolgt und/oder
-- eine Alarmierung eines Netzwerkelements des Kernnetzes (110) des Telekommunikationsnetzes (100) erfolgt und/oder
-- eine Alarmierung eines über die Funkschnittstelleneinheit (20) mit der Basisstationsvorrichtung (10) verbundenen Telekommunikationsendgeräts (24) erfolgt und/oder
-- die Funkschnittstelleneinheit (20) zumindest teilweise abgeschaltet wird.

5. Basisstationsvorrichtung (10) nach einem der vorhergehenden Ansprüche, **dadurch gekennzeichnet, dass** die Datenkommunikation zwischen dem ersten Schaltkreis und dem zweiten Schaltkreis eine auf dem Internet-Protokoll beruhende Datenkommunikation ist.,

6. Verfahren zum Betrieb einer Basisstationsvorrichtung (10) als Teil eines Zugangsnetzes eines Telekommunikationsnetzes (100), insbesondere eines Mobilkommunikationsnetzes, wobei die Basisstationsvorrichtung (10) ein Gehäuse (11) und in dem Gehäuse (11) eine Funkschnittstelleneinheit (20) sowie eine Kernnetzschnittstelleneinheit (30) aufweist, wobei die Basisstationsvorrichtung (10) zwischen der Funkschnittstelleneinheit (20) einerseits und der Kernnetzschnittstelleneinheit (30) andererseits einen Netzwerkleitungsabschnitt (40) aufweist, wobei die Funkschnittstelleneinheit (20) durch einen ersten integrierten Schaltkreis und die Kernnetzschnittstelleneinheit (30) durch einen zweiten integrierten Schaltkreis realisiert werden, wobei zwischen dem ersten integrierten Schaltkreis und dem zweiten integrierten Schaltkreis eine Datenkommunikation im Klartext erfolgt, wobei das Verfahren folgende Schritte gekennzeichnet ist.
- ein Überwachen wenigstens eines Leitungsparameters des Netzwerkleitungsabschnitts (40) beim Betrieb der Basisstationsvorrichtung (10), wobei der Leitungsparameter ein Leitungsparameter ist aus der Gruppe von Leitungsparametern umfassend:
-- die Eingangsimpedanz des Netzwerkleitungsabschnitts (40),
-- den Isolationswert des Netzwerkleitungsabschnitts (40),
-- die Kapazität des Netzwerkleitungsabschnitts (40) und
-- die Induktivität des Netzwerkleitungsabschnitts (40); und
- ein Generieren eines Indikatorsignals, falls eine Änderung des wenigstens einen Leitungsparameters oberhalb eines vorgegebenen Schwellenwerts detektiert wird; und
- ein Deuten der Änderung des wenigstens einen Leitungsparameters oberhalb des vorgegebenen Schwellenwerts als einen Angriff auf den Netzwerkleitungsabschnitt (40), wobei der Angriff durch einen elektrischen und/oder kapazitiven und/oder induktiven Abgriff am Netzwerkleitungsabschnitt (40) realisiert wird; und
- ein Übermitteln des Indikatorsignals an die Funkschnittstelleneinheit (20) und/oder die Kernnetzschnittstelleneinheit (30).

7. Verfahren nach Anspruch 6, **dadurch gekennzeichnet, dass** der wenigstens eine Leitungsparameter durch die Funkschnittstelleneinheit (20) erfasst wird

8. Verfahren nach Anspruch 6 oder 7, **dadurch gekennzeichnet, dass** der wenigstens eine Leitungsparameter durch die Kernnetzschnittstelleneinheit (30) erfasst wird.

9. Verfahren nach einem der Ansprüche 6 bis 8, **dadurch gekennzeichnet, dass** im Fall der Generierung des Indikatorsignals
-- eine optische und/oder akustische Indikation am Gehäuse (11) der Basisstationsvorrichtung (10) erfolgt und/oder
-- eine Alarmierung eines Netzwerkelements des Kernnetzes (110) des Telekommunikationsnetzes (100) erfolgt und/oder
-- eine Alarmierung eines über die Funkschnittstelleneinheit (20) mit der Basisstationsvorrichtung (10) verbundenen Telekommunikationsendgeräts (24) erfolgt und/oder
-- die Funkschnittstelleneinheit (20) zumindest teilweise abgeschaltet wird.

10. Verfahren nach einem der vorhergehenden Ansprüche 6 bis 9, **dadurch gekennzeichnet, dass** die Datenkommunikation zwischen dem ersten Schaltkreis und dem zweiten Schaltkreis eine auf dem Internet-Protokoll beruhende Datenkommunikation ist.

11. Computerprogramm mit Programmcodemitteln, mit deren Hilfe alle Schritte eines Verfahrens nach einem der Ansprüche 6 bis 10 durchführbar sind, wenn das Computerprogramm auf einer programmierbaren Einrichtung ausgeführt wird.

12. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 6 bis 10 durchführbar sind, wenn das Computerprogramm auf einer programmierbaren Einrichtung ausgeführt wird.

## Claims

1. Base station apparatus (10), operating as part of an access network of a telecommunications network (100), in particular a mobile communications network, wherein said base station apparatus (10) has a housing (11), having a radio interface unit (20) and a core network interface unit (30) within the housing (11), wherein the base station apparatus (10) has a network cable section (40) between the radio interface unit (20) on one side and the core network interface unit (30) on the other side, wherein the radio interface unit (20) is realised by means of a first integrated circuit, and the core network interface unit (3) is realised by means of a second integrated circuit, wherein between the first integrated circuit and the second integrated circuit a transfer of data in plain text occurs,
characterised that, the base station apparatus (10) has a measuring device (50), wherein the measuring device (50) is operatively connected to the network cable section (40), such that detection of at least one parameter of the network cable section (40) is made by the measuring device, wherein the parameter is a parameter from the following group of parameters:
- the input impedance of the network cable section (40),
- the insulation value of the network cable section (40),
- the capacity of the network cable section (40), and
- the inductance of the network cable section (40),
wherein the base station apparatus (10) is so configured that in the event of detection by the measuring device (50) of a change of at least one parameter to a value above a predefined threshold value, an indicator signal is generated, and the indicator signal is transferred to the radio interface unit (20) and/or the core network interface unit (3), wherein variation of at least one parameter above the predefined threshold value is interpreted as an attack on the network cable section (40), wherein the attack is realised by an electrical and/or capacitative and/or inductive tap into the network cable section (40).

2. Base station apparatus (10) according to claim 1, **characterised in that** the measuring device (50) is part of the radio interface unit (20)

3. Base station apparatus (10) according to any one of the preceding claims, **characterised in that** the measuring device (50) is part of the core network interface unit (30).

4. Base station apparatus (10) according to any one of the preceding claims, **characterised in that** the base station apparatus (10) is configured such that in the event that the indicator signal is generated:
- A visual and/or audible indication takes place on the housing (11) of the base station apparatus (10) and/or
- An alert occurs to a network element of the core network (110) of the telecommunications network (100) and/or
- An alert occurs to a telecommunications terminal (24) connected with the base station apparatus (10) by means of the radio interface unit (20)
- The radio interface unit (20) is at least partially shut down.

5. Base station apparatus (10) according to any one of the preceding claims, **characterised in that** data communication between the first circuit and the second circuit is based on the Internet Protocol for data communication.

6. Method of operating a base station apparatus (10) as part of an access network of a telecommunications network (100), in particular a mobile communication network, wherein said base station apparatus (10) has a housing (11), and within the housing (11) includes a radio interface unit (20) and a core network interface unit (30), wherein the base station apparatus (10) has a network cable section (40) between the radio interface unit (20) on one side and the core network interface unit (30) on the other side, wherein the radio interface unit (20) is realised by means of a first integrated circuit and the core network interface unit (30) is realised by means of a second integrated circuit, wherein between the first integrated circuit and the second integrated circuit a data communication in the form of plain text occurs, wherein the method is **characterised by** the following steps:
- Monitoring of at least one parameter of the network cable section (40) during operation of the base station apparatus (10), wherein the parameter is a parameter selected from the group of parameters comprising:
- The input impedance of the network cable section (40),
- The insulation value of the network cable section (40)
- The capacitance of the network cable section (40) and
- The inductance of the network cable section (40); and
- Generation of an indicator signal if a variation of at least one parameter above a predetermined threshold value is detected; and
- An interpretation of this change in at least one parameter beyond the predetermined threshold as an attack on the network cable section (40), wherein the attack occurs by means of an electrical and/or capacitive and/or inductive tap on the network cable section (40); and
- Transmittance of the indicator signal to the radio interface unit (20) and/or the core network interface unit (30)

7. Method according to claim 6, **characterised in that** the at least one parameter is detected by the radio interface unit (20)

8. Method according to claim 6 or 7, **characterised in that** the at least one parameter is detected by the core network interface unit (30).

9. Method according to one of claims 6 to 8, **characterised in that** in the event of generation of the indicator signal,
- A visual and/or audible indication takes place on the housing (11) of the base station apparatus (10) and/or
- An alert occurs to a network element of the core network (110) of the telecommunications network (100) and/or
- An alert occurs to a telecommunications terminal (24) connected with the base station apparatus (10) by means of the radio interface unit (20)
- The radio interface unit (20) is at least partially shut down.

10. Method according to one of the preceding claims 6 to 9, **characterised in that** the data communication between the first circuit and the second circuit is a based on the Internet Protocol for data communication.

11. Computer program with programming code means, by which means all steps of a method according to one of claims 6 to 10 can be carried out when the computer program is executed on a programmable device.

12. Computer program product having a computer readable medium and a computer program stored on a computer-readable medium with program coding means which are suitable to ensure that all steps of a method according to one of claims 6 to 10 can be carried out when the computer program is executed on a programmable device.

## Revendications

1. Dispositif de station de base (10) à utiliser en tant qu'élément d'un réseau d'accès d'un réseau de télécommunication (100), en particulier d'un réseau de communication mobile, dans lequel le dispositif de station de base (10) présente un boîtier (11) et le boîtier (11) une unité d'interface radio (20) ainsi qu'une unité d'interface de réseau central (30), dans lequel le dispositif de station de base (10) présente entre l'unité d'interface radio (20) d'une part et l'unité d'interface de réseau central (30) d'autre part une section de conduction de réseau (40), dans lequel l'unité d'interface radio (20) est réalisée par un premier circuit intégré et l'unité d'interface de réseau central (30) par un second circuit intégré, dans lequel une communication de données en texte clair a lieu entre le premier circuit intégré et le second circuit intégré,
**caractérisé en ce que**
le dispositif de station de base (10) présente un dispositif de mesure (50), lequel dispositif de mesure (50) est relié en interaction avec la section de conduction de réseau (40) de manière à ce que soit effectuée par le dispositif de mesure (50) une détection d'au moins un paramètre de conduction de la section de conduction de réseau (40), le paramètre de conduction étant un paramètre de conduction faisant partie du groupe de paramètres comprenant :
- l'impédance d'entrée de la section de conduction de réseau (40),
- la valeur d'isolation de la section de conduction de réseau (40),
- la capacité de la section de conduction de réseau (40) et
- l'inductivité de la section de conduction de réseau (40),
dans lequel le dispositif de station de base (10) est configuré de manière à ce que, dans le cas d'une détection par le dispositif de détection (50) d'une modification de l'au moins un paramètre de conduction au-dessus d'une valeur seuil prédéfinie, un signal indicateur est généré et le signal indicateur est transmis à l'unité d'interface radio (20) et/ou à l'unité d'interface de réseau central (30), la modification de l'au moins un paramètre de conduction au-dessus de la valeur seuil prédéfinie étant interprétée comme une atteinte à la section de conduction de réseau (40), l'atteinte (40) étant constituée par un palpage électrique et/ou capacitif et/ou inductif sur la section de conduction de réseau (40).

2. Dispositif de station de base (10) selon la revendication 1, **caractérisé en ce que** le dispositif de mesure (50) fait partie de l'unité d'interface radio (20).

3. Dispositif de station de base (10) selon une des revendications précédentes, **caractérisé en ce que** le dispositif de mesure (50) fait partie de l'unité d'interface de réseau central (30).

4. Dispositif de station de base (10) selon une des revendications précédentes, **caractérisé en ce que** le dispositif de station de base (10) est configuré de manière à ce que, en cas de génération du signal indicateur
- une indication optique et/ou acoustique a lieu sur le boîtier (11) du dispositif de station de base (10) et/ou
- une alarme d'un élément de réseau du réseau central (110) du réseau de télécommunication (100) a lieu et/ou
- une alarme d'un terminal de télécommunication (24) relié par l'unité d'interface radio (20) au dispositif de station de base (10) a lieu et/ou
- l'unité d'interface radio (20) est éteinte au moins partiellement.

5. Dispositif de station de base (10) selon une des revendications précédentes, **caractérisé en ce que** la communication de données entre le premier circuit et le second circuit est une communication de données reposant sur le protocole Internet.

6. Procédé d'utilisation d'un dispositif de station de base (10) faisant partie d'un réseau d'accès d'un réseau de télécommunication (100), en particulier d'un réseau de communication mobile, dans lequel le dispositif de station de base (10) présente un boîtier (11) et le boîtier (11) une unité d'interface radio (20) ainsi qu'une unité d'interface de réseau central (30), dans lequel le dispositif de station de base (10) présente entre l'unité d'interface radio (20) d'une part et l'unité d'interface de réseau central (30) d'autre part une section de conduction de réseau (40), dans lequel l'unité d'interface radio (20) est réalisée par un premier circuit intégré et l'unité d'interface de réseau central (30) par un second circuit intégré, dans lequel une communication de données en texte clair a lieu entre le premier circuit intégré et le second circuit intégré, le procédé étant **caractérisé par** les étapes suivantes :
- une surveillance d'au moins un paramètre de conduction de la section de conduction de réseau (40) pendant le fonctionnement du dispositif de station de base (10), le paramètre de conduction étant un paramètre de conduction faisant partie du groupe de paramètres comprenant :
- l'impédance d'entrée de la section de conduction de réseau (40),
- la valeur d'isolation de la section de conduction de réseau (40),
- la capacité de la section de conduction de réseau (40) et
- l'inductivité de la section de conduction de réseau (40) ; et
- une génération d'un signal indicateur si une modification de l'au moins un paramètre de conduction au-dessus d'une valeur seuil prédéfinie est détectée ; et
- une interprétation de la modification de l'au moins un paramètre de conduction au-dessus de la valeur seuil prédéfinie est interprétée comme une atteinte à la section de conduction de réseau (40), l'atteinte (40) étant constituée par un palpage électrique et/ou capacitif et/ou inductif sur la section de conduction de réseau (40) ; et
- une transmission du signal indicateur à l'unité d'interface radio (20) et/ou l'unité d'interface de réseau central (30).

7. Procédé selon la revendication 6, **caractérisé en ce que** l'au moins un paramètre de conduction est détecté par l'unité d'interface radio (20).

8. Procédé selon la revendication 6 ou 7, **caractérisé en ce que** l'au moins un paramètre de conduction est détecté par l'unité d'interface radio (30).

9. Procédé selon une des revendications 6 à 8, **caractérisé en ce que**, dans le cas de la génération du signal indicateur,
- une indication optique et/ou acoustique a lieu sur le boîtier (11) du dispositif de station de base (10) et/ou
- une alarme d'un élément de réseau du réseau central (110) du réseau de télécommunication (100) a lieu et/ou
- une alarme d'un terminal de télécommunication (24) relié par l'unité d'interface radio (20) au dispositif de station de base (10) a lieu et/ou
- l'unité d'interface radio (20) est éteinte au moins partiellement.

10. Procédé selon une des revendications précédentes 6 à 9, **caractérisé en ce que** la communication de données entre le premier circuit et le second circuit est une communication de données reposant sur le protocole Internet.

11. Programme informatique comportant des moyens de codage de programme, à l'aide desquels toutes les étapes d'un procédé selon une des revendications 6 à 10 peuvent être exécutées si le programme informatique est exécuté sur un dispositif programmable.

12. Programme informatique comportant un support lisible par ordinateur et un programme informatique lisible par ordinateur comportant des moyens de codage de programme, qui sont aptes faire en sorte que toutes les étapes d'un procédé selon une des revendications 6 à 10 soient réalisables si le programme informatique est exécuté sur un dispositif programmable.
